# EUROPÄISCHE PATENTANMELDUNG

(11) **EP 0 889 009 A1**
(43) Veröffentlichungstag der Anmeldung: **07.01.1999**
(21) Anmeldenummer: 98110004.3
(22) Anmeldetag: 02.06.1998
(51) Int. Cl.: C02F 9/00, C02F 1/52, C02F 1/48, C02F 1/62, C02F 1/70, C22B 3/46

(54) **Verfahren zur Abtrennung von Schwermetallionen**

(30) Priorität: 02.07.1997 DE 19728266
(71) Anmelder: Forschungszentrum Karlsruhe GmbH, 76133 Karlsruhe (DE)
(72) Erfinder: Köster, Rainer, Dr., 76229 Karlsruhe (DE); Franzreb, Matthias, Dr., 76185 Karlsruhe (DE); Höll, Wolfgang, Dr., 76275 Ettlingen (DE); Eberle, Siegfried, Prof. Dr., 76344 Eggenstein-Leopoldshafen (DE); Hausmann, Rudolf, 76139 Karlsruhe (DE)

(57) **Zusammenfassung**

Die Erfindung betrifft ein Verfahren zur Abtrennung von Schwermetallionen aus einem sauren Abwasser, bei dem dem Abwasser Eisenpartikel zugesetzt werden, wonach der pH-Wert des Abwassers auf 7 bis 12 eingestellt wird und die entstehenden Ausfällungen abgetrennt werden. Erfindungsgemäß sollen die Schwermetallionen effektiver abgetrennt werden. Dies wird dadurch erreicht, daß Eisenpartikel mit einer Teilchengröße von 1 bis 80 µm eingesetzt werden.

## Beschreibung

Die Erfindung betrifft ein Verfahren zur Abtrennung von Schwermetallionen gemäß dem Oberbegriff des ersten Patentanspruchs.

Ein solches Verfahren wird in der Veröffentlichung von Alan R. Bowers, Carlos A. Ortiz und Roberto J. Cardozo: "IRON PROCESS FOR TREATMENT OF CR(VI) WASTEWATERS" in METALL FINISHING, Nov. 1986, pp. 37-40 beschrieben. Dem sauren Abwasser werden gesiebte Eisenfeilspäne mit einer durchschnittlichen Partikelgröße von 0,35 mm zugegeben. Anschließend wird der pH-Wert in einigen Versuchen auf 7 bis 10 eingestellt. Die Autoren verweisen darauf, daß die sich bei der Zugabe von Eisen, üblicherweise in der Form von Eisenchlorid oder Eisensulfat, bildenden Eisenoxide oder Eisenhydroxyde ausgezeichnete Adsorbentien für leichter lösliche und komplexierte Metalle seien. Deshalb verbessere ein Eisenhydroxid-Niederschlag nicht nur die Koagulation und das Sedimentieren des Chrom(III)-Hydroxids, sondern absorbiere auch Cr³⁺-Ionen.

In J. P. Gould: "THE KINETICS OF HEXAVALENT CHROMIUM REDUKTION BY METALLIC IRON", Water Res. Vol. 16, pp. 871-877, 1982 wird ebenfalls über die Reduktion von sechswertigem Chrom aus Abwasser mit Hilfe von metallischem Eisen berichtet. Für die Versuche wird Eisendraht mit einem Durchmesser von ca. 245 µm verwendet. Der pH-Wert wird nach der Eisenzugabe auf maximal 4 erhöht.

Die Veröffentlichung von James W. Patterson und Wilma A. Jancuk: "CEMENTATION TREATMENT OF COPPER IN WASTEWATER", Proceedings of the Industrial Waste Conference, Ind., 13-15. Mai 1980, 853-865, (1981), befaßt sich mit der Abtrennung von Kupfer aus Abwasser durch Zugabe von partikelförmigen metallischem Eisen. Kupfer scheidet sich hierbei auf dem metallischen Eisen ab. Die Reaktionsgleichungen der ablaufenden Reaktionen werden angegeben. Die Autoren verwenden Eisenschrot mit einem mittleren Teilchendurchmesser im Bereich zwischen 4 und 0,46 mm in etwa 100-fachem Überschuß verglichen mit dem Kupfergehalt der Kupferlösung. Nach der Zugabe des Eisenschrots wird der pH-Wert in einem Versuch auf 3,8, in späteren Versuchen auf 2,1 eingestellt. Es ergeben sich maximale Kupfer-Abscheideraten von 80 %.

Bei den bekannten Verfahren bilden sich häufig schlecht abtrennbare Schwermetallhydroxid-Niederschläge. Insbesondere die Hydroxide von Chrom, Kupfer und Eisen sind schwer isolierbar, so daß die Abtrennung dieser Schwermetalle bei den gattungsgemäßen Verfahren unvollständig ist.

Der Erfindung liegt die Aufgabe zugrunde, das Verfahren der eingangs genannten Art weiter zu verbessern, so daß Schwermetallionen effektiver abgeschieden werden.

Die Aufgabe wird erfindungsgemäß durch die im ersten Patentanspruch gekennzeichnete Maßnahme gelöst. Bevorzugte Ausgestaltungen des erfindungsgemäßen Verfahrens sind in den weiteren Ansprüchen angegeben.

Beim erfindungsgemäßen Verfahren wird schwermetallhaltiges Abwasser eingesetzt, das üblicherweise einen pH-Wert von weniger als 3 aufweist. Sofern der pH-Wert höher ist, soll er vor der Druchführung des Verfahrens durch Säurezugabe erniedrigt werden. Das Abwasser wird mit Eisenpartikeln einer Teilchengröße von 1 bis 80 µm versetzt, wonach der pH-Wert auf 7 bis 12 erhöht wird. Dabei bilden sich Schwermetall-Hydroxide, die nachfolgend abgetrennt werden. Insbesondere lassen sich auf diese Weise Kupfer, Blei, Chrom, Cadmium und Zink abscheiden.

Erfindungsgemäß wurde festgestellt, daß Eisenpartikel mit einer Teilchengröße von 1 bis 80 µm besonders wirksam sind, weil sie einerseits in die entstehenden Schwermetallhydroxid-Flocken eingebunden werden und andererseits leicht in Suspension gehalten werden können. Dies ist bei den im Stand der Technik genannten Partikelgrößen nicht der Fall. Gemäß dem Stand der Technik liegt Eisen im wesentlichen als Bodensatz vor. Die Eisenpartikel der erfindungsgemäß vorgeschlagenen Größe wirken wie ein Kondensations- und Reaktionskeim, an dem die chemische Reduktion der Schwermetallionen und/oder die Adsorption der Schwermetallhydroxide stattfindet. Hierbei entstehen Verbundflocken aus Schwermetallen (Kupfer) und/oder Schwermetallhydroxiden mit eingeschlossenen Eisenpartikeln. Die Verbundflocken sind wesentlich schwerer als reines Schwermetall-Hydroxid. Deshalb lassen sich die beim erfindungsgemäßen Verfahren gebildeten Niederschläge wesentlich leichter und vollständiger abtrennen als beim Stand der Technik, so daß sich Abwässer mit dem erfindungsgemäßen Verfahren mit einem hohen Wirkungsgrad von Schwermetallen befreien lassen.

Der zeitliche Verlauf der pH-Einstellung auf 7 bis 12 erfolgt vorzugsweise entsprechend der Größe der Eisenpartikel. Bei sehr kleinen Partikeln kann der pH-Wert bereits nach wenigen Minuten (etwa 5) geändert werden. Bei Partikelgrößen von ca. 10 bis 80 µm sollte der pH-Wert erst nach einer längeren Wartezeit, etwa nach 5 bis 60 Minuten, durch Zugabe einer Base angehoben werden.

Als Abtrennverfahren für die gebildeten Niederschläge mit den enthaltenen Eisenkernen bieten sich die Sedimentation oder die Zentrifugierung an. Wegen der ferromagnetischen Eigenschaften, die den Schwermetallhydroxid-Partikeln durch den Eisenkern verliehen werden, kann die Abtrennung auch durch Magnetseparation bei niedrigen Feldstärken, beispielsweise mit Trommelabscheidern, erfolgen. Der wesentliche Vorteil der Magnetseparation liegt im geringen Platzbedarf der dafür notwendigen Anlage, wodurch großräumige Absetzbecken und Sandfilter entfallen.

Die Eisenpartikel aus den Eisen/Schwermetallhydroxid-Verbundpartikeln sich lassen wiedergewinnen und erneut einsetzen, so daß das Verfahren eine wesentliche Reduktion der insgesamt benötigten Menge an Eisen erlaubt. Die Wiedergewinnung von Eisen kann bei hohen Feldstärken und bei hohen Turbulenzen, beispielsweise in einem Hochgradientenmagnetabscheider, erfolgen. Dabei werden die Eisenpartikel aus den Verbundflocken entfernt.

Im Gegensatz zu den eingangs beschriebenen Verfahren ist es beim erfindungsgemäßen Verfahren möglich, mit einem wesentlich geringeren Eisenüberschuß zu arbeiten. Ein 2- bis 100-facher Überschuß an Eisen ist ausreichend; in aller Regel kann mit einem 2- bis zwanzigfachen Überschuß gearbeitet werden.

Das erfindungsgemäße Verfahren kann bei Raumtemperatur durchgeführt werden. Generell sind Temperaturen zwischen 10° C und 50° C gut geeignet, wobei die höheren Temperaturen (ab 25° C) bevorzugt werden.

Die Erfindung wird im folgenden anhand von Versuchsbeispielen und einer Figur näher erläutert.

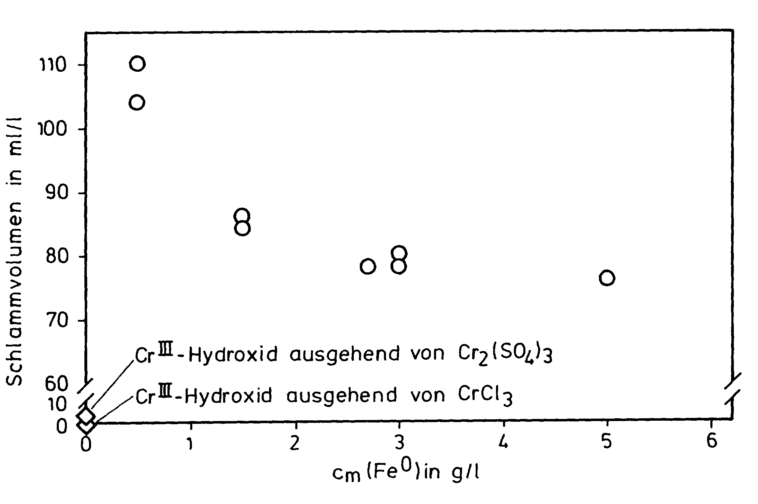

Die Figur zeigt das nach Beispiel 3 erhaltene Ergebnis.

Für die Versuche wurden thermostatisierbare, 250- und 500 ml fassende Reaktionsgefäße eingesetzt, die mit einem Thermometer, einem pH-Meter und einem Redox-Meter ausgerüstet waren. Der Gefäßinhalt konnte mit einem Flugelrührer (500 ml) bzw. einem Magnetrührer (250 ml) durchmischt werden. Die Meßwertverarbeitung erfolgte in einem Computer.

### Beispiel 1

### Reduktion und Fällung von Chromat mit verschiedenen Eisenpulvern

Versuche wurden mit den in der folgenden Tabelle aufgeführten Eisenpulvern unternommen:

| Fe-Pulver | D [µm] | C [%] | Si [%] | Mn [%] | S [%] | P [%] | Fe [%] |
|---|---|---|---|---|---|---|---|
| WÜRTH GH-R**) | 200 -400 | 2,8 -3,4 | 0,8 -1,4 | 0,6 -1,2 | <0,15 | <0,4 | >93 |
| WÜRTH GS-R**) | 200 -400 | 0,08 -0,2 | 0,1 -2,0 | 0,3 -1,5 | <0,05 | <0,05 | >96 |
| WÜRTH GH-K**) | 1- 80 | 2,8 -3,4 | 0,8 -1,4 | 0,6 -1,2 | <0,15 | 0,4 | >93 |
| *)Fe 006020 | < 60 | < 0,5 | < 1,4 | - | <0,15 | <0,15 | >99,0 |
| Merck p.a. | ≈ 10 | - | - | <0,002 | <0,002 | - | >99,5 |

| | | | | | | | |
|---|---|---|---|---|---|---|---|
| *) Eisenpulver der Fa. GOODFELLOW | | | | | | | |
| **) Stahlschrott-Strahlmittel | | | | | | | |

In die Gefäße wurden 250 bzw. 500 ml einer Natriumdichromatlösung mit 1 mmol/l bzw. 104 mg/l Dichromat vorgelegt. Danach die Lösung mit 1 molarer Schwefelsäure auf pH 2 angesäuert. Anschließend wurden 1,1 g/l Eisenpulver von MERCK bzw. eine solche Menge der anderen Eisenpulver (in der Reihenfolge der Tabelle: 33,5 g/l, 33,5 g/l, 4,5 g/l, 6,7 g/l) zugegeben, daß sich in allen Fällen eine gleiche Eisen-Gesamtoberfläche ergab. Nach der Zugabe des Eisenpulver wurde mit 1 molarer Natronlauge der pH-Wert auf 9 erhöht, um Chromat auszufällen. Der dabei auftretende Niederschlag wurde durch Sedimentation (30 min) abgetrennt und qualitativ und quantitativ untersucht.

Eine Schwierigkeit ergab sich daraus, daß es selbst mit der höchsten Ruhrergeschwindigkeit (450 Umdrehungen/min) nicht gelang, den Hauptteil der beiden groben WÜRTH-Eisenpulver in Suspension zu halten. Verbundpartikel konnten sich mit dem groben Eisenpulver daher nicht bilden, weil es als Bodensatz vorlag. Dennoch zeigten alle Eisenpulver eine reduzierende Wirkung.

Von allen Eisenpulvern zeigten die Eisenpulver von GOODFELLOW und MERCK sowie die Stahlschrott-Partikel mit der Bezeichnung GH-K der Firma WÜRTH die beste Wirkung. Ein Grund hierfür ist in der geringen Korngröße der Partikel zu sehen, von denen ein großer Anteil durch Rühren in Suspension gehalten werden konnte. Mit allen fünf Pulvern wurde ein Tausendstel der ursprünglichen Chromatkonzentration ereicht. Mit dem GOODFELLOW-Pulver waren hierfür 3 min, mit dem GH-K-Pulver 20 min, mit dem MERCK-Pulver 6 min und mit den beiden groben WÜRTH-Eisenpulvern GH-R und GS-R 45 min erforderlich.

Eine lichtmikroskopische Untersuchung des mit den drei feinkörnigen Eisenpulvern erzeugten Niederschlags ergab, daß der Niederschlag aus Eisenpartikeln bestand, die von Hydroxidflocken umgeben waren, daß sich somit Verbundflocken gebildet hatten.

### Beispiel 2

### Reduktion und Fällung von Kupfer mit Eisenpulver

Der Versuch gemäß Beispiel 1 wurde mit einer Kupfersalzlösung (1 mmol Cu/l) wiederholt. Der Anfangs-pH-Wert wurde wiederum mit Schwefelsäure auf 2 eingestellt. Es wurde nur das Merck-Eisenpulver in einer Menge von 2 g/l eingesetzt. 10 min nach der Eisenzugabe wurde der End-pH-Wert 7 eingestellt.

Die Restkonzentration lag im Bereich des Abwassergrenzwertes von 0,5 mg Cu/l entsprechend einer 99 %-igen Cu-Abtrennung. Vergleicht man dieses Ergebnis mit den Angaben in der oben genannten Druckschrift von James W. Patterson und Wilma A. Jancuk, die eine maximale Reduktion von 80 % erhalten hatten, so wird deutlich, welchen wesentlichen Einfluß die Partikelgröße des Eisenpulvers auf die Abscheidung des Schwermetalls Kupfer hat.

### Beispiel 3

### Kontrolle des Einflusses der Eisenpartikel

Zur Kontrolle, inwieweit die in dem Verfahren beschriebene Bildung von Verbundpartikeln aus Schwermetallausfällungen und bei den Reaktionen verbleibenden Eisenpartikeln zu einer Verbesserung der Abtrennbarkeit führt, wurden Versuche zur Eliminierung von Chromat mit einer anschließenden Sedimentationsphase in einem Imhoff-Trichter durchgeführt. Hierzu wurde die Eisenzugabe mit anschließender Chromatreduktion ausgehend von c(Cr-VI) = 1 mmol/l in einem für Jartests (siehe DVGW-Arbeitsblatt W218) standardisierten Aufbau durchgeführt:
- l Lösung mit c(Cr-V) = 1 mmol/l; 8,3 mmol/l Schwefelsäure,
- Zugabe unterschiedlicher Mengen des Merck-Eisenpulvers,
- min Reaktionsphase bis zum vollständigen Chromatabbau,
- pH-Anhebung auf pH = 9 mit 1 mol/l NaOH,
- min langsames Rühren mit 40 Umdrehungen/min,
- min Sedimentation bei Rührerstillstand,
- Probenahme aus 4 cm Tiefe zur Bestimmung des unsedimentierten bzw. nicht gefällten Chromanteils,
- Kurzes Aufrühren der sedimentierten Flocken und Überführung in einen Imhofftrichter,
- Ablesen des Schlammvolumens nach zwei Stunden.

Zur Kontrolle des Einflusses der Eisenpartikel auf die Sedimentation wurde zusätzlich in zwei Versuchen direkt eine lösung mit einer Cr-III-Konzentration von 1 mmol/l (dies entspricht genau der Cr-III-Konzentration, die auch beim Chromatabau gemäß den Beispielen 1 und 2 entsteht) eingesetzt, wobei kein Eisen zugegeben wurde.

Die Figur zeigt die gemessenen Schlammvolumina in [ml/l] in Abhängikeit der eingesetzten Eisenmenge in [g/l].

Im Falle der beiden Chrom(III)-Lösungen ohne Eisenpartikel konnte selbst nach 2 Stunden Sedimentationszeit kein bzw. nur ein sehr geringer Niederschlag festgestellt werden. Die Lösung im Imhoff-Trichter wies lediglich eine starke Trübung auf, was auf die Bildung von Kolloiden schließen läßt. Bei den Versuchen mit Zugabe von Eisenpartikeln ergab sich, daß das Schlammvolumen bis zu einer Eisenpartikelkonzentration von 3 g/l deutlich abnimmt und danach ungefähr konstant bleibt. Hierbei ist anzumerken, daß in allen Versuchen mit Eisenzugabe der unsedimentierte bzw. ungefällte Anteil des Chroms unter 1 % lag. Das Chrom befand sich also quantitativ im Niederschlag und das geringe Schlammvolumen bei höheren Eisenpartikelzugaben läßt sich nur durch die Bildung eines kompakteren Schlammes erklären.

## Patentansprüche

1. Verfahren zur Abtrennung von Schwermetallionen aus einem sauren Abwasser, bei dem dem Abwasser Eisenpartikel zugesetzt werden, wonach der pH-Wert des Abwassers auf 7 bis 12 eingestellt wird und die entstehenden Ausfällungen abgetrennt werden,
dadurch gekennzeichnet, daß
Eisenpartikel mit einer Teilchengröße von 1 bis 80 µm eingesetzt werden.

2. Verfahren nach Anspruch 1, dadurch gekennzeichnet, daß
die Ausfällungen durch Sedimentation oder Zentrifugieren abgetrennt werden.

3. Verfahren nach Anspruch 1, dadurch gekennzeichnet, daß
die Ausfällungen durch Magnetseparation abgetrennt werden.

4. Verfahren nach einem der Ansprüche 1 bis 3, dadurch gekennzeichnet, daß
aus den abgetrennten Ausfällungen Eisen durch Hochgradientenmagnetseparation zurückgewonnen wird.

5. Verfahren nach einem der Ansprüche 1 bis 4, dadurch gekennzeichnet, daß
die Eisenpartikel im Vergleich zum Gesamtgehalt der Schwermetallionen im Abwasser in 2- bis 100-fachem Überschuß zugegeben werden.
